# NEUE EUROPÄISCHE PATENTSCHRIFT

(11) **EP 0 593 902 B2**
(45) Veröffentlichungstag und Bekanntmachung des Hinweises auf die Entscheidung über den Einspruch: **01.12.1999**
(45) Hinweis auf die Patenterteilung: 30.10.1996
(21) Anmeldenummer: 93114818.3
(22) Anmeldetag: 15.09.1993
(51) Int. Cl.: H02B 13/035

(54) **Schaltanlage für Mittelspannung**
Medium-voltage switchgear
Installation de commutation à moyenne tension

(30) Priorität: 21.10.1992 DE 9214177 U
(43) Veröffentlichungstag der Anmeldung: 27.04.1994
(73) Patentinhaber: AEG Sachsenwerk GmbH, D-93055 Regensburg (DE)
(72) Erfinder: Stegmüller, Karl, Dipl.-Ing., D-93109 Wiesent (DE); Reichl, Erwin, Dipl.-Ing., D-93105 Tegernheim (DE)
(74) Vertreter: Dreiss, Fuhlendorf, Steimle & Becker

(56) Entgegenhaltungen:
- EP-EP- 0 582 828
- DE-A- 2 733 777
- DE-A- 3 215 236
- DE-A- 3 528 770
- CIRED, 11th International Conference on Electricity Distribution 1991, volume 1: Reports, Seiten 1.1.1 bis 1.1.6
- Vorbenutzung von Kapex-Lastschaltanlagen der Firma Karl Pfisterer, Elektrotechnische Spezialartikel GmbH&Co. KG, Stuttgart (DE)

## Beschreibung

Die Erfindung betrifft eine Schaltanlage für Mittelspannung.

Bei einer bekannten Schaltanlage (DE-A-35 28 770) befindet sich in einer mit dem Anlagengehäuse vereinigten zylindrischen Buchse eine Vakuumschaltkammer, deren beweglicher Schaltkontakt mit einem in den Innenraum des Anlagengehäuses ragenden schwenkbaren Schaltkontakt eines Trennschalters verbunden ist. während ihr feststehender Kontakt durch einen Verschlußdeckel der Buchse nach außen geführt ist. Ein feststehender Schaltkontakt des Trennschalters sitzt an einer Sammelschiene, während ein zugeordneter feststehender Erdkontakt mit der Masse des Anlagengehäuses verbunden ist. Der Antrieb dieses kombinierten Leistungs-Trenn- und Erdschalter. dessen Bauteile an unterschiedlichen Anlagenteilen sitzen, erfolgt über eine gemeinsame. am schwenkbeweglichen Schaltkontakt angreifende Schaltstange, die durch das Anlagengehäuse zu einer Antriebsvorrichtung geführt ist. Durch die Zuordnung einzelner Elemente dieser Schaltvorrichtung zu verschiedenen Anlagenteilen ist eine präzise und formstabile Zuordnung der einzelnen Schalterelemente und ihrer Halterungen zueinander erforderlich.

Es ist bei einer Schaltanlage auch bekannt (DE-A-32 15 230) in einem mit Schutzgas gefüllten Anlagengehäuse nebeneinander einen Leistungsschalter und einen Trennschalter anzuordnen, der zugleich als Erdungsschalter ausgebildet ist. Der Leistungsschalter und der Trenn-Erdungsschalter sind an eigenen Halterungen im Anlagengehäuse festgesetzt, wobei der feststehende Kontakt des Trennschalters einer Sammelschiene und der feststehende Kontakt des Erdungsschalters am Anlagengehäuse vorgesehen sind. Auch bei diesem Aufbau müssen die einzelnen Schalterelemente für sich im Anlagengehäuse gehalten und insbesondere die Kontaktelemente des Trenn-Erdungsschalters in funktionsgerechter Zuordnung an den betreffenden Anlagenteilen festgesetzt sein.

In der EP 582 828 A1 ist eine metallgekapselte, gasisolierte Mittelspannungsschaltanlage beschrieben, die zwei nebeneinander angeordnete und miteinander verbundene Schaltfelder aufweist. Bei der EP 582 828 A1 handelt es sich um ein Dokument nach Art. 54(3) EPÜ, welches nur bezüglich der Neuheit relevant ist. In der EP 582 828 A1 ist kein einstückiger Träger offenbart, der dem Leistungsschalter und dem Trennschalter zugeordnet ist.

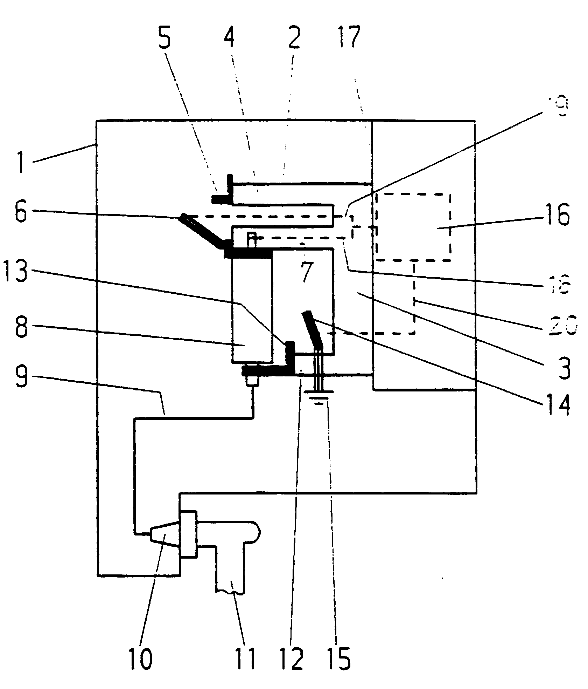

Von der Konferenz "CIRED, 11th International Conference on Electricity Distribution, 1991" gibt es einen Bericht, dessen Zeitpunkt der Veröffentlichung nicht geklärt ist. In "Volume 1, Seiten 1.1.1 bis 1.1.5" dieses Berichts sind Bilder 11 und 12 dargestellt, aus denen Bauteile 3 und 4 zu entnehmen sind. Bei diesen Bauteilen dürfte es sich um einen "isolierenden/erdenden Schalter" und einen Leistungsschalter handeln. Bei einem Bauteil Z könnte es sich um ein Gehäuseteil handeln, an dem Teile der Bauteile 3 und 4 angebracht sind. Der feststehende Kontakt des isolierenden/erdenden Schalters (Bauteil 3) wird nicht von dem Bauteil 2 gehalten. Hierzu ist ein zusätzliches Bauteil vorhanden. Aus dem Bericht geht nicht hervor, aus welchem Material das Bauteil 2 besteht. In dem Bericht ist klargestellt, daß der isolierende/erdende Schalter mit einem unabhängigen Antrieb versehen ist.

Der Erfindung liegt die Aufgabe zugrunde, bei einer Schaltanlage für Mittelspannung-Maßnahmen zu treffen, die einen vereinfachten, kompakten und raumsparenden Aufbau ermöglichen.

Die Lösung dieser Aufgabe erfolgt gemäß der Erfindung durch die Merkmale des ersten Anspruchs.

Bei einer Schaltanlage gemäß der Erfindung sind der Leistungsschalter und der Trennschalter durch Halterung aller zugehörigen Bauelemente an einem gemeinsamen Träger zu einer Funktionseinheit zusammengefaßt. Der Träger ist dabei als ein Teil ausgebildet und besteht aus einem elektrisch isolierenden Werkstoff. Diese Baueinheit kann zudem mit einem integrierten Erdungsschalter am Träger ausgestattet sein, wobei der Erdungsschalter seitlich neben dem Leistungsschalter angeordnet ist und den durch dessen axiale Länge vorgegebenen Raum nutzt. Dadurch wird die Raumausnutzung dieser Schaltereinheit noch weiter verbessert Der Trager für den Trennleistungsschalter sitzt an der Gehäusewand des Außengehäuses an welche von außen die zugehörige gemeinsame Antriebseinrichtung für die Schalter angesetzt ist. Dabei kann nicht nur die Schaltfolge für den Leistungsschalter und Trennschalter, sondern auch für den Erdungsschalter mit einer einzigen Antriebseinrichtung ausgeführt werden. Hinsichtlich des Trennleistungsschalters ist die Schaltfolge dabei so programmiert, daß beim Ausschalten zuerst der Leistungsschalter und danach der Trennschalter geöffnet und beim Einschalten zuerst der Trennschalter und danach der Leistungsschalter geschlossen wird. Im Bedarfsfall kann durch die Antriebsvorrichtung auch der Erdungsschalter betätigt werden, und zwar so, daß er nach dem Öffnen des Trennschalters geschlossen und vor dem Schließen desselben wieder geöffnet werden kann. Mit dem Erdungsschalter wird vom Leistungsschalter wegführende Leitungsverbindung zu einem Kabelabgang geerdet.

Die Erfindung ist nachfolgend anhand der Prinzipskizze eines Ausführungsbeispiels näher erläutert.

In einem Außengehäuse 1 einer nur schematisch angedeuteten gekapselten Mittelspannungsschaltanlage sitzt in einem mit einem Schutzgas, insbesondere SF6-gefüllten Schaltfeld ein Trennleistungsschalter 2, der an einem gemeinsamen Träger 3 ausgebildet ist. Der Träger 3 besteht vorzugsweise aus einem elektrisch isolierenden hochspannungsfestem Isolierstoff und trägt an einem Arm 4 einen feststehenden Kontakt 5, der mit dem beweglichen Kontakt 6 eines Hochspannungs-Trennschalters zusammenwirkt. Der bewegliche Schaltkontakt 6 ist an einem weiteren Arm 7 des Trägers 3 schwenkbar gelagert und steht elektrisch mit einem Anschluß eines Leistungsschalters 8 in Verbindung, der andererseits über eine Verbindungsleitung 9 mit einem Geräteanschlußteil 10 für ein von außen anzuschließendes Hochspannungskabel 11 verbunden ist. Der Leistungsschalter 8, der vorzugsweise als Vakuumschaltkammer ausgebildet ist, sitzt ebenfalls am mittleren Arm 7 des Trägers 3 fest. Der Trennschalter 5, 6 und der Leistungsschalter 8 sitzen dabei in Höhenrichtung übereinander, wobei der Leistungsschalter 8 mit seiner Längsachse senkrecht steht. Unterhalb des mittleren Arms 7 ist eine weiterer. zum Leistungsschalter 8 gerichteter. jedoch mit Abstand davon endender Arm 12 am Träger 3 vorgesehen. der im Bereich seines freien Endes den feststehenden Kontakt 13 eines Erdungsschalters trägt. dessen schwenkbeweglicher Kontakt 14 bei 15 geerdet und im Bereich der Wurzel dieses Armes 12 drehbar gelagert ist. Dieser Erdungsschalter 13, 14 sitzt somit (bei Ansicht von der Seite) seitlich neben dem eine beachtliche axiale Länge aufweisenden Leistungsschalter 8 am Träger 3 und nutzt den durch die axiale Länge vorgegebenen Raum.

Der Trennleistungsschalter 2 wird von einer einzigen gemeinsamen Antriebseinrichtung 16 betätigt, die außen auf einer Gehäusewand 17 sitzt, an der innerhalb des schutzgasgefüllten Schaltfeldes der zugehörige Träger 3 befestigt ist. Diese Antriebseinrichtung 16 ist so aufgebaut, daß beim Ausschalten des Trennleistungsschalters über eine Antriebsverbindung 18 zuerst der Leistungsschalter 8 und danach über eine Antriebsverbindung 19der Trennschalter 5, 6 öffnet, während beim Einschalten zuerst der Trennschalter 5, 6 und danach der Leistungsschalter 8 schließt Sie kann gleichzeitig mit der Antriebseinrichtung für den Erdungsschalter 13, 14 ausgestattet sein, der jedoch gegebenenfalls vom auch gleichen Antriebsmechanismus über eine Antriebsverbindung 20 in funktionsrichtiger Folge in Bezug auf den Trennleistungsschalter betätigt werden kann.

Insgesamt ergibt sich so eine baulich gedrängte Ausgestaltung eines Schaltfeldes innerhalb einer gas-isolierten Schaltanlage, bei welcher die Schaltfunktionen des in SF6 angeordneten Trennleistungsschalters und gegebenenfalls eines mit diesem Trennleistungsschalter baulich vereinigten Erdungsschalters mit einer einzigen Antriebseinrichtung gesteuert werden können.

## Patentansprüche

1. Schaltanlage für Mittelspannung mit wenigstens einem Leistungsschalter (8) und einem damit verbundenen Trennschalter (5, 6), die von einem mit Schutzgas, insbesondere SF6, gefüllten Schaltfeld eines Anlagengehäuses (1) eingekapselt sind, und die eine einzige gemeinsame Antriebsvorrichtung (16) aufweisen, wobei der Leistungsschalter (8) und der Trennschalter (5, 6) insgesamt zu einem Trennleistungsschalter (2) in einer Baueinheit baulich vereinigt sind, wobei der Trennleistungsschalter (2) einen gemeinsamen Träger (3) für den Leistungsschalter (8) und den Trennschalter (5, 6) aufweist, wobei der Träger (3) an der Gehäusewand (17) des Anlagengehäuses (1) festgesetzt ist, an welcher die Antriebsvorrichtung (16) angeordnet ist, und wobei der Träger (3) einstückig aus einem elektrischen Isolierstoff hergestellt ist.

2. Schaltanlage nach Anspruch 1, wobei ein Erdungsschalter (13, 14) am Träger (3) seitlich neben dem Leistungsschalter angeordnet ist.

3. Schaltanlage nach Anspruch 2, wobei der Erdungsschalter (13, 14) mit der Antriebsvorrichtung (16) des Trennleistungsschalters (2) über eine eigene Antriebsverbindung (20) gekoppelt ist.

4. Schaltanlage nach Anspruch 1 oder einem der folgenden, wobei der Träger (3) mehrere parallele Arme (4, 7, 12) aufweist, wobei ein Arm (4) einen feststehenden Kontakt (5) des Trennschalters (5, 6) trägt, dessen beweglicher Schaltkontakt (6) an einem weiteren Arm (7) des Trägers (3) schwenkbar gelagert ist, und wobei der Schaltkontakt (6) mit einem Anschluss des Leistungsschalters verbunden ist, der an dem weiteren Arm (7) festgesetzt ist.

5. Schaltanlage nach Anspruch 4, wobei ein zusätzlicher Arm (12) des Trägers (3) den Erdungsschalter (13, 14) trägt, mit dem eine vom Leistungsschalter (8) wegführende Leitungsverbindung (9) zu einem Kabelabgang (10, 11) zu erden ist.

## Claims

1. Switchgear for medium voltage comprising at least one power circuit breaker (8) and an isolator (5, 6) connected thereto, which are encapsulated by a switchboard section of a plant housing filled with a protective gas, in particular SF6, and which have a single common drive device (16), the power circuit breaker (8) and the isolator (5, 6) being combined as a whole to form an isolating circuit breaker (2) in one component, the isolating circuit breaker (2) having a common support (3) for the power circuit breaker (8) and the isolator (5, 6), the isolating circuit breaker (2) being fixed to the housing wall (17) of the plant housing (1) on which the drive device (16) is disposed, and the support (3) being formed in one piece from an electrical insulating material.

2. Switchgear according to Claim 1, wherein an earthing switch (13, 14) is disposed on the support (3) laterally next to the power circuit breaker.

3. Switchgear according to Claim 2, wherein the earthing switch (13, 14) is coupled to the drive device (16) of the isolating circuit breaker (2) via its own drive connection (20).

4. Switchgear according to Claim 1 or one of the subsequent Claims, wherein the support (3) has a plurality of parallel arms (4, 7, 12), an arm (4) carrying a fixed contact (5) of the isolator (5, 6), whose moving switch contact (6) is pivotably mounted on a further arm (7) of the support (3) and the switch contact (6) being connected to a terminal of the power circuit breaker which is fixed to the further arm (7).

5. Switchgear according to Claim 4, wherein an additional arm (12) of the support (3) carries the earthing switch (13, 14), with which a lead connection (9) leading away from the power circuit breaker (8) is to be earthed to a cable outlet (10, 11).

## Revendications

1. Installation de commutation pour moyenne tension avec au moins un interrupteur de puissance (8) et un sectionneur (5, 6) relié à celui-ci qui sont protégés par un champ de commutation rempli d'un gaz de protection, en particulier SF6, d'un boîtier d'installation (1) et qui comportent un seul dispositif d'entraînement (16) commun, où l'interrupteur de puissance (8) et le sectionneur (5, 6) sont réunis sur le plan de la construction dans une unité de construction pour former dans l'ensemble un interrupteur de puissance et de sectionnement (2), où l'interrupteur de puissance et de sectionnement (2) comporte un support (3) commun pour l'interrupteur de puissance (8) et le sectionneur (5, 6) et où le support (3) est fixé sur la paroi (17) du boîtier d'installation (1) sur laquelle est placé le dispositif d'entraînement (16), et où le support (3) est réalisé d'une seule pièce dans une matière isolante électrique.

2. Installation de commutation selon la revendication 1, où un interrupteur de mise à la masse (13, 14) est placé sur le support (3), latéralement à côté de l'interrupteur de puissance.

3. Installation de commutation selon la revendication 2, où l'interrupteur de mise à la masse (13, 14) est couplé avec le dispositif d'entraînement (16) de l'interrupteur de puissance et de sectionnement (2), par une liaison d'entraînement (20) propre.

4. Installation de commutation selon la revendication 1 ou l'une des suivantes, où le support (3) comporte plusieurs bras parallèles (4, 7, 12), où un bras (4) porte un contact (5) fixe du sectionneur (5, 6), dont le contact de commutation (6) mobile est monté pivotant sur un autre bras (7) du support (3), et où le contact de commutation (6) est relié à un branchement de l'interrupteur de puissance qui est fixé sur l'autre bras (7).

5. Installation de commutation selon la revendication 4, où un bras supplémentaire (12) du support (3) porte l'interrupteur de mise à la terre (13, 14) avec lequel une connection de ligne (9) partant de l'interrupteur de puissance (8), et menant à un départ de câble (10, 11) doit être mise à la terre.
